# EUROPÄISCHE PATENTANMELDUNG

(11) **EP 1 035 426 A2**
(43) Veröffentlichungstag der Anmeldung: **13.09.2000**
(21) Anmeldenummer: 00103780.3
(22) Anmeldetag: 23.02.2000
(51) Int. Cl.: G02B 7/10

(54) **Vorrichtung zum Verschieben eines optischen Elementes entlang der optischen Achse**

(30) Priorität: 12.03.1999 DE 19910947
(71) Anmelder: Carl Zeiss, 89518 Heidenheim (Brenz) (DE); Carl-Zeiss-Stiftung trading as Carl Zeiss, 89518 Heidenheim (Brenz) (DE)
(72) Erfinder: Holderer, Hubert, 89551 Königsbronn (DE)
(74) Vertreter: Lorenz, Werner, Dr.-Ing.

(57) **Zusammenfassung**

Bei einer Vorrichtung zum Verschieben eines optischen Elementes 2 entlang der optischen Achse, insbesondere einer Linse mit großem Durchmesser in einem Objektiv, ist das optische Element 2 von einem Haltering 1 getragen, an dem eine Verstelleinrichtung 8 mit einem Grobverstellantrieb 9 und einem Feinverstellantrieb 10 angreift. Der Haltering 1 ist über Festkörpergelenke 4, die quer zur optischen Achse eine deutliche größere Steifigkeit aufweisen als entlang der optischen Achse, mit einem Stützring 3 verbunden, welcher an einer Fassung angeordnet ist oder einen Teil davon bildet. Die Festkörpergelenke 4 sind derart zwischen dem Haltering 1 und dem Stützring 3 angeordnet, daß der Haltering 1 bei Betätigung der Verstelleinrichtung 8 entlang der optischen Achse verschiebbar ist.

## Beschreibung

Die Erfindung betrifft eine Vorrichtung zum Verschieben eines optischen Elementes entlang der optischen Achse nach der im Oberbegriff von Anspruch 1 näher definierten Art.

Aus der JP 83 13 785 A ist eine Vorrichtung der eingangs erwähnten Art bekannt, bei der ein Grobantrieb mit einem Ritzel und einer Zahnstange zur Verschiebung einer Linse entlang der optischen Achse und ein piezoelekzrisches Element für eine Feinverstellung vorgesehen ist.

Die Verwendung von piezoelektrischen Elementen für Verschiebungen von Linsen in Objektiven ist auch aus der JP 080 94 906 A, der US 56 75 444 A und der US 55 76 894 A bekannt.

Zur Einstellung, Bildfehlerbeeinflussung usw. eines Objektives, wie z.B. zur Einstellung einer Vergrößerung soll ein optisches Element, z.B. eine Linse, sehr feinfühlig und auch mit sehr geringen Wegen entlang der optischen Achse verstellbar sein. Insbesondere bei großen Durchmessern des optischen Elementes, wie z.B. 200 mm und mehr, besteht das Problem dabei zum einen darin, daß man eine große Masse des optischen Elementes zu bewegen hat und daß zum anderen Querbewegungen, d.h. Bewegungen des optischen Elementes quer zur optischen Achse, soweit wie nur irgendwie möglich verhindert werden sollen. Auch Kippungen, insbesondere um eine Achse senkrecht zur optischen Achse, sollen verhindert werden.

Der vorliegenden Erfindung liegt daher die Aufgabe zugrunde, eine Vorrichtung der eingangs erwähnten Art zu schaffen, durch die insbesondere große und schwergewichtige optische Elemente sehr präzise und feinfühlig in Richtung der optischen Achse verschiebbar sind und zwar ohne die Gefahr von Querbewegungen.

Erfindungsgemäß wird diese Aufgabe durch die im kennzeichnenden Teil von Anspruch 1 genannten Merkmale gelöst.

Durch die erfindungsgemäße Ausgestaltung wird eine große Steifigkeit quer zur optischen Achse erreicht, wohingegen eine genügende Weichheit in Richtung der optischen Achse gegeben ist. Durch die Verwendung von erfindungsgemäßen Festkörpergelenken ist es möglich, eine Verbindung des Stützringes mit dem Haltering herzustellen, wobei die gewünschten Steifigkeitsverhältnisse gegeben sind. Stützring und Haltering sind selbstverständlich nicht auf zylinderförmige Teile beschränkt, sondern auf übliche ein optisches Element fassende Bauteile gerichtet.

Eine besonders vorteilhafte Lösung ergibt sich dann, wenn der Haltering und der Stützring nebst dazwischenliegenden Festkörpergelenken einstückig ausgebildet sind. Diese Maßnahme bewirkt eine hochgradige Verminderung von Hysterese (slip-stick) und von Spannungen.

Eine sehr präzise Verschiebung ohne Querbewegungen wird erreicht, wenn wenigstens drei Festkörpergelenke über den Umfang verteilt zwischen dem Haltering und dem Stützring angeordnet sind. In vorteilhafter Weise wird man dabei jedem Festkörpergelenk auch eine Verstelleinrichtung zuordnen. Sieht man zusätzlich noch Sensoren vor, durch die die Lage bzw. Ausrichtung des Halteringes überwacht wird, so läßt sich das optische Element exakt verschieben, wobei auch die optische Achse der Linse stets auf der optischen Achse des Gesamtsystems verbleibt. Durch die erfindungsgemäße Anordnung mit mindestens drei Festkörpergelenken und entsprechenden Antrieben wird damit vermieden, daß die Lagerung instabil gegen Verkippung ist. Bei einer Koppelung der Sensoren mit den Verstelleinrichtungen läßt sich das optische Element über kontrollierte Regelschleifen bzw. einen geschlossenen Regelkreis sehr gleichmäßig verfahren.

Vorteilhafte Weiterbildungen und Ausgestaltungen ergeben sich aus den übrigen Unteransprüchen und aus den anhand der Zeichnung prinzipmäßig dargestellten Ausführungsbeispielen.

Es zeigt:
- Figur 1: ausschnittsweise eine Seitenansicht bzw. einen Teil der Abwicklung der erfindungsgemäßen Vorrichtung;
- Figur 2: ausschnittsweise eine Draufsicht mit Teilschnitten auf die Vorrichtung nach der Fig. 1;
- Figur 3: ein weiteres Ausführungsbeispiel der Erfindung in gleicher Ansicht wie die nach Fig. 1; und
- Figur 4: eine dritte Ausführungsform der Erfindung in der gleichen Ansicht wie die nach der Fig. 1.

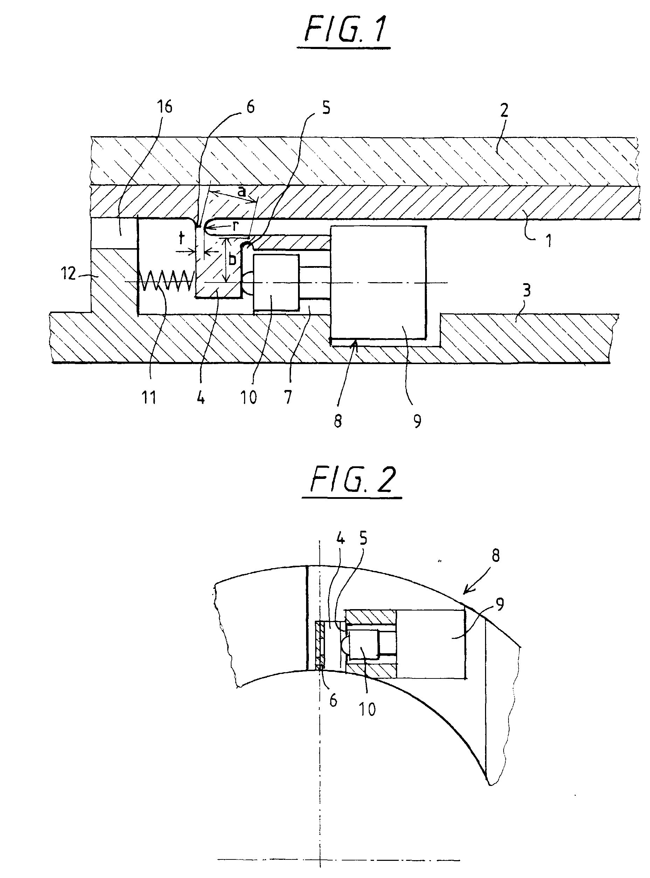

Fig. 1 zeigt eine Ausgestaltung mit einem oberen Ring als Haltering 1 für eine Linse 2 als optisches Element und einem unteren Ring als Fassung 3. Regelmäßig über den Umfang verteilt befinden sich beispielsweise in einem Abstand von 120° drei Festkörpergelenke 4. Die Festkörpergelenke 4 nach diesem Ausführungsbeispiel sind als Stellhebel ausgebildet mit einer Koppel, die auf einer Seite bzw. an einem Ende über eine Gelenkstelle 5 mit dem Stützring 3 und am anderen Ende mit einer Gelenkstelle 6 mit dem Haltering 1 verbunden ist.

Der Haltering 1, der Stützring 3 und die Festkörpergelenke 4 sind monolythisch bzw. einstückig ausgebildet, wobei die Gelenkstellen 5, 6 jeweils die Verbindungsstellen zwischen dem Haltering 1 und dem Stützring 3 darstellen. Sie werden gebildet durch Durchmesserreduzierungen, welche z.B. durch Ausfräsungen hergestellt sind. Die Steifigkeit der Festkörpergelenke 4 wird jeweils durch den Radius r und die Dicke t im Bereich der Gelenkstelle 5 bzw. 6 definiert. Die Materialstärke, d.h. die Tiefe bzw. die längliche Erstreckung der Gelenkstellen 5 und 6, die sich zum Mittelpunkt der Einrichtung, d.h. quer zur optischen Achse nach innen erstreckt, und der Elastizitätsmodul E gehen dabei nur linear in die Berechnung der Steifigkeiten und Spannungen ein. Die Verwendung hochfester Materialien oder superelastischer Materialien, wie z.B. Nickel-Titan-Legierungen, die auch als sogenannte Shape-Memory-Alloys bekannt sind, ergibt große Federwege.

In einer Aussparung 7 oder Bohrung zwischen dem Haltering 1 und dem Stützring 3 ist eine Verstelleinrichtung 8 mit einem Schrittmotor 9 als Grobverstellantrieb und mit einem Piezoantrieb 10 als Feinverstellantrieb angeordnet. Durch den Schrittmotor 9 wird über eine Spindel im Schrittmotor 9 in bekannter Weise ein entsprechend großer Hub erreicht, wobei durch den auf dem Verstellglied des Schrittmotores 9 angeordneten Piezoantrieb 10 bei dessen Aktivierung eine kleine Schrittweite erreicht wird. Der Piezoantrieb 10 greift dabei in Umfangstichtung an der Koppel des Gelenkes 4 in einem Abstand b von der Gelenkstelle 5 an. Bei Aktivierung der Verstelleinrichtung 8 wird somit eine Verstellkraft auf die Koppel des Gelenkes 4 an der Angriffsstelle des Piezoantriebes 10 ausgeübt, welche sich in eine Drehkraft um die Gelenkstelle 5 auswirkt. Über die Gelenkstelle 6 erfährt somit bei einer Aktivierung der Verstelleinrichtung 8 der Haltering 1 eine in Pfeilrichtung nach oben gerichtete Verschiebekraft. Das Verhältnis der beiden Strecken a, welches der Abstand der beiden Gelenkstellen 5 und 6 voneinander ist, und b, welches der Abstand des Angriffspunktes des Piezoantriebs 10 zur Gelenkstelle 5 ist, bildet die Übersetzung, mit dem die Verstelleinrichtung 8 die Stellbewegung durchführt.

Eine Druckfeder 11, die an der von dem Piezoantrieb 10 abgewandten Seite der Koppel des Gelenkes 4 angreift und die sich mit ihrem anderen Ende an einem Absatz 12 des Stützringes 3 abstützt, führt mit ihrer Vorspannung zu einer Erhöhung der Eigenfrequenz. Die Gelenkstellen 6, an denen jeweils der Haltering 1 hängt, sollten mit ihrer Tiefe bzw. Längserstreckung möglichst auf die Mitte der Vorrichtung, d.h. die optische Achse, zeigen. Die Gelenkstelle 5 sollte stets parallel zur Gelenkstelle 6 am Haltering 1 liegen (siehe Fig. 2) . Die somit radial verlaufende Tiefe der Gelenkstelle 6 kann z.B. zwischen 20 mm und 50 mm betragen.

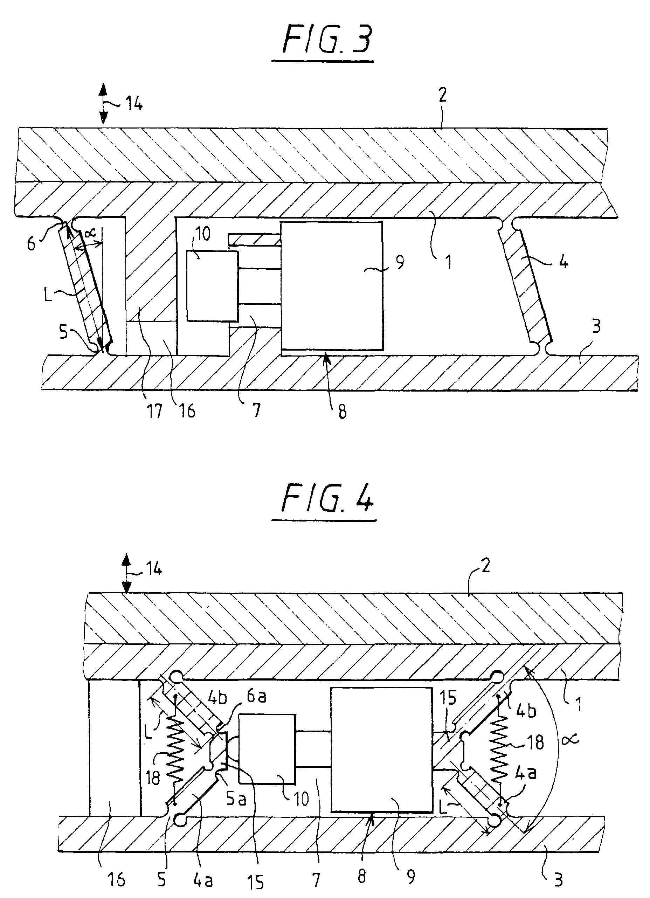

Bei dem Ausführungsbeispiel nach der Fig. 3 werden die beiden dargestellten Koppeln des Festkörpergelenks 4 durch eine Drehung des Halteringes 1 verkippt. Wie ersichtlich, liegen die Koppeln als dünne Platten in einem Winkel α schräg gegenüber der parallel dazu verlaufenden optischen Achse. Wird nun durch die Verstelleinrichtung 8 eine Kraft in Umfangsrichtung mit einer daraus resultierenden Verschiebung des Halteringes 1 in Pfeilrichtung 13 erzeugt, so ergibt eine Bewegung des Halteringes 1 gleichzeitig eine Verschiebung in Pfeilrichtung 14 entsprechend der Änderung des Anstellwinkels α, womit eine entsprechende Verschiebung der auf dem Haltering 1 gelagerten Linse 2 in Richtung der optischen Achse erreicht wird.

Die Parameterlänge L der Koppel des Gelenkes 4 und der Anstellwinkel α bilden die Übersetzung der Querbewegung in die Hubbewegung gemäß Pfeilrichtung 14. Damit die Eigenfrequenz erhöht wird, ist es günstig, einen negativen Winkel α zu wählen und eine Zugfeder (nicht dargestellt) zwischen dem Haltering 1 und dem Stützring 3 einzubauen.

Auch in diesem Falle sollten jeweils die beiden Gelenkstellen 5 und 6 der Koppeln der Festkörpergelenke 4 zumindest parallel sein und die Gelenkstelle 6 in Richtung der Mitte der Vorrichtung zeigen (entsprechend Fig. 2) . Bei dieser Ausgestaltung ist gegebenenfalls eine einzige Verstelleinrichtung 8 als Antrieb ausreichend, wenn sie an einem sich parallel zur optischen Achse erstreckenden Ansatz oder Vorsprung 17 des Halteringes 1 angreift.

In dem Ausführungsbeispiel nach der Fig. 4 ist eine Variante des in der Fig. 3 dargestellten Ausführungsbeispieles dargestellt. In diesem Falle erfährt der Haltering 1 und damit auch die Linse 2 keine Drehbewegung, sondern es findet eine reine Hubbewegung statt, wobei die beiden Flächen, zwischen denen die Verstelleinrichtung 8 eingebaut ist, nämlich Halteringe 1 und Stützring 3, stets parallel zueinander bleiben. Diese Ausgestaltung ist insbesondere für eine Betätigung durch einen Piezoantrieb 10 von Vorteil.

Wie ersichtlich, bilden die in diesem Falle jeweils zweiteilig ausgebildeten Festkörpergelenke 4 mit ihren Gelenkteilen bzw. Koppelteilen 4a und 4b eine Art Kniehebel mit jeweils einem mittig dazwischenliegenden Druckteil 15, an welchem der Piezoantrieb 10 der Verstelleinrichtung 8 angreift. Das Koppelteil 4a besitzt an seinem einen Ende die Gelenkstelle 5 mit dem Stützring 3 und an seinem anderen Ende eine Gelenkstelle 5a mit dem Druckteil 15. Das Koppelteil 4b besitzt die Gelenkstelle 6 mit dem Haltering 1 und an seinem anderen Ende eine weitere Gelenkstelle 6a mit dem Druckteil 15. Auch in diesem Falle werden die Gelenkstellen 5, 5a, 6 und 6a durch entsprechende Durchmesserreduzierungen in Form von Bohrungen bzw. Abrundungen in den Koppelteilen 4a, 4b gebildet. Dabei erstreckt sich eine seitliche Bohrung an der Gelenkstelle 5 bzw. 6 jeweils noch in den Stützring 3 bzw. den Haltering 1 und zwar aufgrund der Schrägstellung der Koppelteile 4a und 4b.

Wie weiterhin aus der Fig. 4 ersichtlich ist, liegt die Verstelleinrichtung 8 derart zwischen zwei benachbart zueinander liegenden Festkörpergelenken 4, daß durch eine einzige Verstelleinrichtung 8 jeweils zwei Festkörpergelenke 4 betätigt werden können. Dabei greift an dem in der Zeichnung links dargestellten Festkörpergelenk 4 der Piezoantrieb 10 an. Der Schrittmotor 9 der Verstelleinrichtung 8 stützt sich mit seinem Gehäuse an dem Druckteil 15 des benachbarten Festkörpergelenkes 4 ab. Wird nun die Verstelleinrichtung 8 aktiviert, so werden entsprechend Aktio und Reaktio beide Festkörpergelenke 4 entsprechend verstellt, was in einer Änderung der Schrägstellung der Koppelteile 4a und 4b resultiert und damit in einen drehfreien Hub in Pfeilrichtung 14 des Halteringes 1 und damit der Linse 2 in Richtung der optischen Achse. Zur Rückstellung sind jeweils Rückstellfedern 18 zwischen den Koppelteilen 4a und 4b oder zwischen dem Stützring 3 und dem Haltering 1 vorgesehen.

Allen drei Ausführungsbeispielen gemeinsam ist, daß über den Umfang verteilt angeordnete Sensoren 16, z.B. drei Stück, vorgesehen sind, die zwischen dem Haltering 1 und dem Stützring 3 derart angeordnet sind, daß sie die Lage bzw. Ausrichtung der Anlageflächen des Halteringes 1 für das optische Element 2 messen. Durch die Sensoren 16 können Verkippungen des Halteringes 1 festgestellt werden bzw. können diese bei einer Koppelung mit den Verstelleinrichtungen 8, z.B. drei Stück am Umfang verteilt, dafür sorgen, daß eine gleichmäßige Hubbewegung bzw. Verstellbewegung des Halteringes 1 entlang der optischen Achse erreicht wird.

Als Antrieb für den erfindungsgemäßen Manipulator, also die Vorrichtung zum Verschieben eines optischen Elementes, sind alle Aktuatoren mit bedarfsgerechter Kombination von Steifigkeit, Hub und Auflösung und Reproduzierbarkeit der Stellbewegung geeignet. Ein Beispiel sind 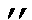 Inch worm®-Antriebe (Inch worm ist Markenzeichen, Vertrieb burleigh).

## Patentansprüche

1. Vorrichtung zum Verschieben eines optischen Elementes entlang der optischen Achse, insbesondere einer Linse mit großem Durchmesser in einem Objektiv, wobei das optische Element von einem Haltering getragen ist, an dem eine Verstelleinrichtung mit mindestens einem Verstellantrieb angreift, dadurch gekennzeichnet, daß der Haltering (1) über Festkörpergelenke (4), die quer zur optischen Achse eine deutlich größere Steifigkeit aufweisen als entlang der optischen Achse, mit einem Stützring (3) verbunden ist, welcher an einer Fassung angeordnet ist oder welcher einen Teil der Fassung bildet, wobei die Festkörpergelenke (4) derart zwischen dem Haltering (1) und dem Stürzring (3) angeordnet sind, daß der Haltering (1) bei Betätigung der Verstelleinrichtung (8) entlang der optischen Achse verschoben wird.

2. Vorrichtung nach Anspruch 1, dadurch gekennzeichnet, daß der Haltering (1) und der Stützring (3) nebst dazwischenliegenden Festkörpergelenken (4) einstückig ausgebildet sind.

3. Vorrichtung nach Anspruch 1 oder 2, dadurch gekennzeichnet, daß die Festkörpergelenke (4) jeweils durch eine Koppel gebildet sind, an deren einem Ende eine mit dem Haltering (1) verbundene Gelenkstelle (6) und an derem anderen Ende eine mit dem Stützring (3) verbundene Gelenksteile (5) vorgesehen ist.

4. Vorrichtung nach Anspruch 3, dadurch gekennzeichnet, daß die Gelenkstellen (5,6) jeweils durch Durchmesserreduzierungen der Koppel (4) im Bereich der Verbindungsstelle mit dem Haltering (1) und dem Stützring (3) gebildet sind.

5. Vorrichtung nach einem der Ansprüche 1 bis 4, dadurch gekennzeichnet, daß der Feinverstellantrieb (10) ein piezoelektrisches Element aufweist.

6. Vorrichtung nach einem der Ansprüche 1 bis 5, dadurch gekennzeichnet, daß wenigstens drei Festkörpergelenke (4) über den Umfang verteilt zwischen dem Haltering (1) und dem Stützring (3) angeordnet sind.

7. Vorrichtung nach Anspruch 6, dadurch gekennzeichnet, daß für jedes Festkörpergelenk (4) eine Verstelleinrichtung (8) vorgesehen ist.

8. Vorrichtung nach Anspruch 6 und 7, dadurch gekennzeichnet, daß zur Lagebestimmung des Halteringes (1) Sensoren (16) vorgesehen sind.

9. Vorrichtung nach einem der Ansprüche 1 bis 8, dadurch gekennzeichnet, daß die Versteileinrichtung (8) einen Schrittmotor (9) für eine Grobverstellung aufweist, auf dessen Verstellglied der Feinverstellantrieb (10) für eine Feinverstellung angeordnet ist.

10. Vorrichtung nach einem der Ansprüche 2 bis 9, dadurch gekennzeichnet, daß wenigstens die Gelenkstelle (6), die mit dem Haltering (1) verbunden ist, mit ihrer Längserstreckung wenigstens annähernd in Richtung auf die optische Achse verläuft, und daß die mit dem Stützring (3) verbundene Gelenkstelle (5) wenigstens annähernd parallel zu dem mit dem Haltering (1) verbundene Gelenkstelle (6) liegt.

11. Vorrichtung nach einem der Ansprüche 3 bis 10, dadurch gekennzeichnet, daß die Verstelleinrichtung (8) derart an dem Festkörpergelenk (4) angreift, daß sich die Koppel des Festkörpergelenks (4) um die mit dem Stützring (3) verbundene Gelenkstelle (5) dreht, wobei die mit dem Haltering (1) verbundene Gelenkstelle (6) derart zu der mit dem Stützring (3) verbundenen Gelenkstelle (5) angeordnet ist, daß bei der Drehung sich eine wenigstens annähernd entlang der optischen Achse gerichtete Bewegung der mit dem Haltering (1) verbundenen Gelenkstelle (6) ergibt (Fig. 1).

12. Vorrichtung nach Anspruch 11, dadurch gekennzeichnet, daß auf der von der Verstelleinrichtung (8) abgewandten Seite der Koppel des Gelenkes (4) eine Federeinrichtung (11) angreift, die sich mit ihrer anderen Seite an dem Stützring (3) abstützt.

13. Vorrichtung nach einem der Ansprüche 1 bis 10, dadurch gekennzeichnet, daß die Koppeln der Festkörpergelenke (4) in einem Winkel α schräg zur optischen Achse liegen (Fig. 3).

14. Vorrichtung nach Anspruch 13, dadurch gekennzeichnet, daß die Verstelleinrichtung (8) an einem sich parallel zur optischen Achse erstreckenden Ansatz oder Vorsprung (17) des Halteringes (1) angreift.

15. Vorrichtung nach einem der Ansprüche 1 bis 10, dadurch gekennzeichnet, daß jedes Festkörpergelenk (4) zweiteilig mit jeweils zwei Koppelteilen (4a,4b) ausgebildet ist, wobei nach Art eines Kniehebels die Verstelleinrichtung (8) an einem zwischen den beiden Koppelteilen (4a,4b) liegenden Druckteil (15) angreift (Fig. 4).

16. Vorrichtung nach Anspruch 15, dadurch gekennzeichnet, daß jedes Koppelteil (4a,4b) an seinen Enden mit einer Gelenkstelle (5,5a bzw. 6,6a) versehen ist, wobei eine Gelenkstelle (6 bzw. 5) mit dem Haltering (1) bzw. dem Stützring (3) verbunden ist, während die jeweils zu dem gleichen Koppelteil (4a bzw. 4b) gehörende Gelenkstelle (5a bzw. 6a) mit dem Druckteil (15) verbunden ist.

17. Vorrichtung nach Anspruch 15 oder 16, dadurch gekennzeichnet, daß zur Rückstellung jeweils zwischen den Koppelteilen (4a,4b) oder zwischen dem Stützring (3) und dem Haltering (1) eine Rückstellfeder (18) vorgesehen ist.

18. Vorrichtung nach Anspruch 15, 16 oder 17, dadurch gekennzeichnet, daß die Verstelleinrichtung (8) jeweils zwei benachbart zueinander liegende Festkörpergelenke (4) betätigt.

19. Vorrichtung nach Anspruch 18, dadurch gekennzeichnet, daß die Verstelleinrichtung (8) auf einer Seite mit dem Feinverstellantrieb (10) an dem Druckteil (15) eines Festkörpergelenkes (4) angreift, während sich die Verstelleinrichtung (8) auf der anderen Seite an dem Druckteil (15) des benachbart dazu liegenden Festkörpergelenk (4) abstützt.

20. Vorrichtung nach mindestens einem der Ansprüche 1 bis 19, dadurch gekennzeichnet, daß als Verstelleinrichtung (8) ein 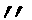 Inch worm"-Antrieb eingesetzt wird.
